# EUROPEAN PATENT APPLICATION

(11) **EP 3 054 132 A1**
(43) Date of publication of application: **10.08.2016**
(21) Application number: 15154189.3
(22) Date of filing: 06.02.2015
(51) Int. Cl.: F02D 41/00, F02D 19/00, F02D 19/02

(54) **METHOD FOR CONTROLLING AN INTERNAL COMBUSTION ENGINE**

(71) Applicant: Caterpillar Motoren GmbH & Co. KG, 24159 Kiel (DE)
(72) Inventor: Sixel, Eike Joachim, 24109 Kiel (DE); Ritscher, Bert, 24159 Kiel (DE); Sivasubramanian, Arvind, 61615 Peoria (US)
(74) Representative: Kramer Barske Schmidtchen Patentanwälte PartG mbB

(57) **Abstract**

A method for controlling an internal combustion engine (100) operating at least partly on gaseous fuel with a varying gas quality (400) is disclosed. The internal combustion engine (100) includes a gaseous fuel admission valve (58) configured to supply the gaseous fuel to charge air. The method comprises operating (step 600) the internal combustion engine (100) to provide a preset power output with a valve opening duration (402) of the gaseous fuel admission valve (58) set within a preferred valve opening duration range (404). The method further comprises allowing (step 602) the valve opening duration (402) to change in order to maintain the preset power output, monitoring (step 604) the valve opening duration (402) and determining (step 606) that, during operation of the internal combustion engine (100) at the predetermined power output, the valve opening duration (402) changed to a value outside the preferred valve opening duration range (404). The method further comprises adapting (steps 610, 614, 618) a fuel supply parameter (412, 503, 507) such that the valve opening duration (402) returns to the preferred valve opening duration range (404), while continuously providing the preset power output.

## Description

### Technical Field

The present disclosure generally relates to internal combustion engines. More particularly, the present disclosure relates to a method for controlling an internal combustion engine running at least partly on gaseous fuel with a varying gas quality.

### Background

Modem internal combustion engines need to operate on an ever increasing range of different gaseous fuels. Those gaseous fuels commonly comprise a blend of different hydrocarbons as well as inert gases. Depending on the gaseous fuel supply, the quality of the gaseous fuel, such as the gaseous fuel pressure or the energy content of the gaseous fuel, may vary. If those variations occur during operation of the internal combustion engine, the engine will have to react in order to continuously operate as desired.

The present disclosure is directed, at least in part, to improving or overcoming one or more aspects of prior systems.

### Summary of the Disclosure

According to one aspect of the present disclosure, a method for controlling an internal combustion engine operating at least partly on gaseous fuel with a varying gas quality is disclosed. The internal combustion engine includes a gaseous fuel admission valve configured to supply the gaseous fuel to charge air. The method comprises operating the internal combustion engine to provide a preset power output with a valve opening duration of the gaseous fuel admission valve set within a preferred valve opening duration range. The method further comprises allowing the valve opening duration to change in order to maintain the preset power output. The method further comprises monitoring the valve opening duration. The method further comprises determining that, during operation of the internal combustion engine at the predetermined power output, the valve opening duration changed to a value outside the preferred valve opening duration range. The method further comprises adapting a fuel supply parameter such that the valve opening duration returns to the preferred valve opening duration range, while continuously providing the preset power output.

According to another aspect of the present disclosure, an internal combustion engine for operation on at least partly gaseous fuel with a varying gas quality is disclosed. The internal combustion engine comprises a gaseous fuel admission valve configured to supply the gaseous fuel to charge air. The internal combustion engine further comprises a control unit connected at least to the gaseous fuel admission valve and configured to perform the method as exemplary disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary internal combustion engine operable at least partly on gaseous fuel;
Fig. 2 shows a schematic cross-sectional view of a cylinder of a liquid fuel ignited internal combustion;
Fig. 3 shows a schematic cross-sectional view of a cylinder of a dual fuel (DF) internal combustion engine including a main fuel injector;
Fig. 4 shows exemplary temporal developments of the valve opening duration and the gaseous fuel differential pressure of an exemplary procedure for controlling the internal combustion engine in response to a varying gas quality;
Fig. 5 shows exemplary temporal developments of various fuel supply parameters of an exemplary procedure for controlling the internal combustion engine in response to a varying gas quality; and
Fig. 6 shows a flow diagram of an exemplary procedure for control an internal combustion engine in response to a varying gas quality.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a variation in gaseous fuel quality (such as a variation in gaseous fuel pressure or a variation in a lower heating value of the gaseous fuel) may cause a valve opening duration of a gaseous fuel admission valve to change. The change may occur, for example, because the internal combustion engine tries to compensate the variation in gas quality by providing an appropriate amount of gaseous fuel in order to maintain, for example, a preset power output of the engine.

However, during a continuous variation in gas quality, the valve opening duration may reach, for example, an upper opening duration limit. Thus, a further variation in gas quality may not be compensated by the gaseous fuel admission valve, because the gaseous fuel admission valve cannot provide more gaseous fuel to the engine. As a consequence, the internal combustion engine may shut down or, if possible, shut off the gaseous fuel supply and directly switch to liquid fuel supply whereby no more gaseous fuel is used for combustion.

The present disclosure is, thus, further based at least in part on the realization that, once the valve opening duration reaches the upper opening duration limit, or more generally, is outside a preferred valve opening duration range, a fuel supply parameter may be adapted such that an appropriate amount of fuel is provided to the engine in order to supply the necessary energy content for compensating the variation in gas quality, and, therewith, to allow the valve opening duration to return back to the preferred valve opening duration range. As a consequence, there may be no need to switch off the gaseous fuel supply or to shut down the engine. Instead gaseous fuel may still be used for combustion, despite its varying gas quality.

The present disclosure is further based in part on the realization that, suitable fuel supply parameters for modifying the fuel energy content may be, for example, a gaseous fuel differential pressure, an amount of ignition fuel supplied by an ignition fuel injector, and/or an amount of liquid fuel supplied by a main liquid fuel injector.

The present disclosure is further based at least in part on the realization that, if a first fuel supply parameter (for example a gaseous fuel differential pressure) reaches a preset upper limit, such as a preset maximal gaseous fuel differential pressure, a second fuel supply parameter (for example an amount of ignition fuel) may be adapted in order to allow the valve opening duration to return back to the preferred valve opening duration limit. Thus, if the adaption of just one fuel supply parameter is not sufficient for providing the necessary fuel energy content in response to the varying gas quality, a second fuel supply parameter may be adapted such that the valve opening duration returns to the preferred valve opening duration limit. By adapting more than one fuel parameter, even larger variations in gas quality may be compensated without the need to switch off the gaseous fuel supply or shut down the engine. As a consequence, even gaseous fuel with a large variation in gas quality may be used for combustion, for example, to maintain a preset power output of the engine.

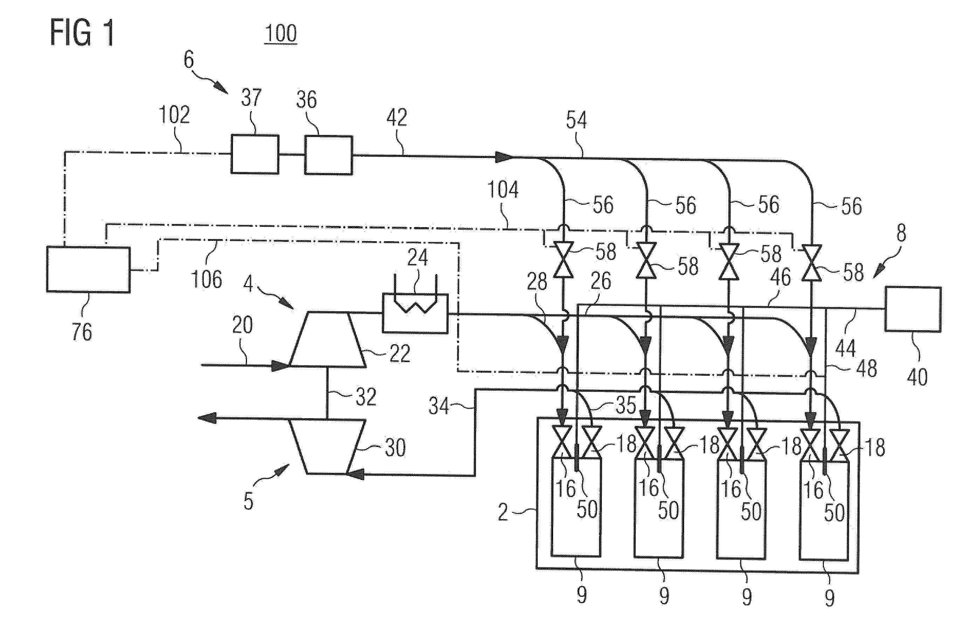

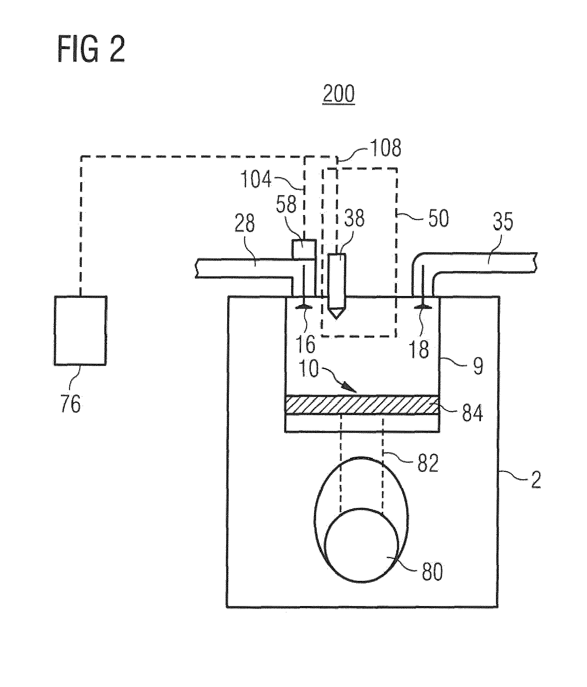

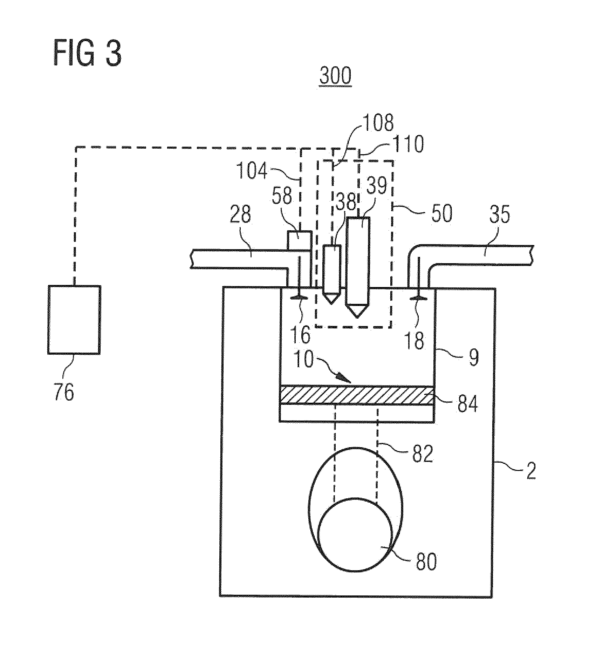

Referring now to Fig. 1, an exemplary internal combustion engine 100 operating at least partly on gaseous fuel with a varying gas quality is shown, such as a liquid fuel ignited gaseous fuel internal combustion engine illustrated schematically in Fig. 2, or a dual-fuel (DF) internal combustion engine illustrated schematically in Fig. 3.

Internal combustion engine 100 comprises an engine block 2, a charge air system 4, an exhaust gas system 5, a gaseous fuel system 6, and a liquid fuel system 8. Internal combustion engine 100 can be powered with a liquid fuel such as, for example, Diesel fuel in a liquid fuel mode (LFM), and with a gaseous fuel such as natural gas provided, for example, by an LNG-system, in a gaseous fuel mode (GFM).

Engine block 2 comprises a plurality of cylinders. Exemplarily, four cylinders 9 are depicted in Fig. 1. Engine block 2 may be of any size, with any number of cylinders, such as 6, 7, 8, 9, 12, 16 or 20, and in any configuration, for example, "V", in-line or radial configuration.

Each cylinder 9 is equipped with at least one inlet valve 16 and at least one outlet valve 18. Inlet valves 16 are fluidly connected to charge air system 4 and configured to provide charge air, or a mixture of charge air and gaseous fuel into cylinders 9. Likewise, outlet valves 18 are fluidly connected to exhaust gas system 5 and configured to direct exhaust gas out of respective cylinder 9.

Charge air is provided by charge air system 4 including an air intake 20, a compressor 22 to charge air, and a charge air cooler 24. A charge air manifold 26 is fluidly connected downstream of charge air cooler 24 and guides charge air via cylinder specific inlet channels 28 into respective cylinders 9.

Exhaust gas system 5 includes an exhaust gas turbine 30 connected to compressor 22 via shaft 32 and an exhaust gas manifold 34 guiding exhaust gas from individual exhaust gas outlet channels 35 to exhaust gas turbine 30.

Charge air system 4 may comprise one or more charge air manifolds 26. Similarly, exhaust gas system 5 may comprise one or more exhaust gas manifolds 34.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering cylinders 9.

Gaseous fuel system 6 comprises a gaseous fuel source 36 connected to gaseous fuel piping 42. Gaseous fuel source 36 constitutes a gaseous fuel feed for supplying gaseous fuel for combustion in GFM (gaseous fuel mode). For example, gaseous fuel source 36 comprises a gas valve unit and a gaseous fuel tank that contains, for example, natural gas in a pressurized state. Gaseous fuel system 6 further comprises a gaseous fuel pressure regulation unit 37 for pressurizing gaseous fuel to a desired gaseous fuel differential pressure.

The gas valve unit is configured to allow, or to block, and to control flow from gaseous fuel tank into gaseous fuel piping 42. The gas valve unit may comprise gaseous fuel control valves, gaseous fuel shut-off valves and venting valves.

Gaseous fuel piping 42 is fluidly connected to a gaseous fuel manifold 54, which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, internal combustion engine 100 may comprise more than one gaseous fuel manifold 54.

Each gaseous fuel admission valve 58 is configured to allow or to block flow of gaseous fuel with a gaseous fuel differential pressure into an individual inlet channel 28 to mix with charge air from charge air system 4 in GFM. Thus, cylinder specific mixing zones downstream of each gaseous fuel admission valve 58 are generated. For example, gaseous fuel admission valves 58 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 9.

As previously mentioned, Fig. 1 illustrates a liquid fuel ignited gaseous fuel internal combustion engine as well as a DF internal combustion engine. For supplying liquid fuel to internal combustion engine 100, liquid fuel system 8 comprises a liquid fuel tank 40 connected to liquid fuel piping 43.

Liquid fuel tank 40 may comprise a first liquid fuel tank for storing a first liquid fuel, for example, heavy fuel oil (HFO), and a second liquid fuel tank for storing a second liquid fuel, for example, Diesel fuel. Liquid fuel tank 40 constitutes a liquid fuel source for supplying ignition fuel to liquid fuel ignited gaseous fuel internal combustion engine and DF internal combustion engine operated in GFM. Additionally, liquid fuel tank 40 may constitute a liquid fuel source for supplying liquid to DF internal combustion engine operated in LFM (liquid fuel mode).

Liquid fuel piping 43 is fluidly connected to a liquid fuel manifold 46, which splits into a plurality of liquid fuel inlet channels 48. To dose liquid fuel into the combustion chamber of cylinder 9, in each liquid fuel inlet channel 48 a liquid fuel injection system 50 is installed.

Exemplary embodiments of liquid fuel injection system 50 for liquid fuel ignited gaseous fuel internal combustion engine and DF internal combustion engine are described in more detail when referring to Fig. 2 and Fig. 3, respectively.

To control operation of internal combustion engine 100, a control unit 76 is provided. Control unit 76 forms part of a control system of the engine. Control unit 76 is configured to control various components of internal combustion engine 100 such as gaseous fuel pressure regulation unit 37 via a control connection line 102, gaseous fuel admission valves 58 via a control connection line 104 or liquid fuel injection system 50 via a control connection line 106. Alternatively, a second control unit (not shown) may be configured to control the operation of internal combustion engine 100. Further description of the control system and additional control lines between control unit 76 and other components of the engine, such as the liquid fuel injection system 50, will be given when referring to Figs. 2 and 3.

Control unit 76 may further be connected to other sensors not shown in Fig. 1, such as engine load sensors, engine speed sensors, or a power output sensor. Control unit 76 may also be connected to an operator panel (not shown) for issuing a warning to the operator, indicating a failure of the engine or the like.

Control unit 76 may be a single microprocessor or multiple microprocessors that include means for controlling, among others, an operation of various components of internal combustion engine 100. Control unit 76 may be a general engine control unit (ECU) capable of controlling numerous functions associated with internal combustion engine 100 and/or its associated components. Control unit 76 may include all components required to run an application such as, for example, a memory, a secondary storage device, and a processor such as a central processing unit or any other means known in the art for controlling internal combustion engine 100 and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare a valve opening duration of a gaseous fuel admission valve 58 with target values stored on the memory, and, based on the results of the comparison, transmit signals to one or more components of the engine to alter the operation of the same.

Referring now to Fig. 2, a cylinder 9 of a liquid fuel ignited gaseous fuel internal combustion engine 200 as an exemplary embodiment of internal combustion engine 100 of Fig. 1 is shown. Elements already described in connection with Fig. 1 have the same reference numerals, such as engine block 2, control unit 76, and cylinder 9.

Cylinder 9 provides at least one combustion chamber 10 for combusting a mixture of gaseous fuel and charge air, a piston 84, and a crankshaft 80 which is drivingly connected to piston 84 via a piston rod 82. Piston 84 is configured to reciprocate within cylinder 9.

Cylinder 9 is connected to charge air manifold 26 via inlet channel 28 and to exhaust gas manifold 34 via outlet channel 35 (see Fig. 1). Inlet valve 16 is disposed in inlet channel 28, and outlet valve 18 is disposed in outlet channel 35. Gaseous fuel admission valve 58 supplies gaseous fuel with a gaseous fuel differential pressure provided by gaseous fuel pressure regulation unit 37 to combustion chamber 10 of cylinder 9.

Liquid fuel ignited gaseous fuel internal combustion engine 200 further includes liquid fuel injection system 50 indicated by a dashed box. Liquid fuel injection system 50 comprises an ignition fuel injector 38. Ignition fuel injector 38 supplies an amount of ignition fuel to combustion chamber 10 for igniting a mixture of gaseous fuel and charge air admitted to combustion chamber 10 via inlet channel 28. Depending on the dimensions and type of liquid fuel ignited gaseous fuel internal combustion engine 200, the amount of liquid fuel injected through ignition fuel injector 38 may contribute to between 0.2 % and 10 % of the overall amount of energy provided for combustion to liquid fuel ignited gaseous fuel internal combustion engine 200. Thus, depending on how much liquid fuel is injected through ignition fuel injector 38 - for a given amount of gaseous fuel - an energy content of injected ignition fuel may increase or decrease relative to an energy content provided by gaseous fuel via gaseous fuel admission valve 58.

Liquid fuel ignited gaseous fuel internal combustion engine 200 further comprises a control system including control unit 76 connected to ignition fuel injector 38 via control connection line 108 for controlling an injection duration of ignition fuel injector 38. Control unit 76 is further connected to gaseous fuel admission valve 58 via control connection line 104 for monitoring and/or controlling a valve opening duration of gaseous fuel admission valve 58.

Fig. 3 shows a cylinder 9 of a DF internal combustion engine 300 as another exemplary embodiment of internal combustion engine 100 of Fig. 1. Elements already described in connection with Figs. 1 and 2 have the same reference numerals.

DF internal combustion engine 300 comprises liquid fuel injection system 50. When DF internal combustion engine 300 is operated in GFM, liquid fuel injection system 50 is used to inject a pilot amount of ignition fuel into combustion chamber 10. In GFM, liquid fuel injection system 50 may, therefore, have the same function as in liquid fuel ignited gaseous fuel internal combustion engine 200, namely to ignite the mixture of gaseous fuel and charge air. When DF internal combustion engine 300 is operated in LFM, however, liquid fuel injection system 50 injects a large amount of liquid fuel into combustion chamber 10, the amount of liquid fuel being the sole source of energy.

Liquid fuel injection system 50 comprises an ignition fuel injector 38 for injecting the pilot amount of ignition fuel, and a main liquid fuel injector 39 for injecting a large amount of liquid fuel. Main liquid fuel injector 39 may also be used to inject liquid fuel into combustion chamber 10 while DF internal combustion engine 300 is still operated in GFM thereby burning gaseous fuel and liquid fuel. This may be the case, for example, when ignition fuel injector 38 reaches its fuel injection limit and, therefore, may not be able to provide more ignition fuel to combustion chamber 10.

When main liquid fuel injector 39 is used as an auxiliary-type ignition fuel injector, because of its larger fuel injection capacity compared to ignition fuel injector 38, more liquid fuel may be burnt in combustion chamber 10, while continuously operating DF internal combustion engine 300 in GFM. In this case, main liquid fuel injector 39 may be the only liquid fuel injector and a separate ignition fuel injector may not be present in DF internal combustion engine 300. Depending on the dimensions and type of DF internal combustion engine 300, the amount of liquid fuel injected through main liquid fuel injector 39, when operated in GFM, may contribute to between 5 % and 100 % of the overall amount of energy provided for combustion to DF internal combustion engine 300. In the case where main liquid fuel injector 39 is, for example, the only liquid fuel injector, an amount of liquid fuel injected through main liquid fuel injector 39 may contribute to between 0.1 % and 100 % of the overall amount of energy provided for combustion to DF internal combustion engine 300. By increasing an amount of liquid fuel through main liquid fuel injector 39, operation of DF internal combustion engine 300 may gradually transition from GFM to LFM.

Thus, depending on how much liquid fuel is injected through main liquid fuel injector 39 - for a given amount of gaseous fuel - an energy content of injected liquid fuel relative to the energy content provided by the gaseous fuel may be increased further, or may contribute 100 % to the overall amount of energy provided for combustion to DF internal combustion engine 300.

DF internal combustion engine 300 further comprises a control system including control unit 76. Control unit 76 is connected to main liquid fuel injector 39 via control connection line 110 for controlling an injection duration of main liquid fuel injector 39, to ignition fuel injector 38 via control connection line 108 for controlling an injection duration of ignition fuel injector 38, and to gaseous fuel admission valve 58 via control connection line 104 for monitoring and/or controlling a valve opening duration of gaseous fuel admission valve 58.

### Industrial Applicability

Exemplary internal combustion engines suited to the disclosed control procedure are, for example, M46DF, M43DF, M34DF, M32DF, M27DF manufactured by Caterpillar Motoren GmbH & Co. KG, Kiel, Germany. Respective internal combustion engines may be operated at 500 - 1500 rpm and may be applied, for example, in medium speed power generator sets and/or compressor or pump drives. Other engines suited to the disclosed procedure are, for example, gaseous fuel engines of the series 3600 and 3500, as well as other dynamic gas blending engines manufactured by Caterpillar Inc., which are typically operated at speeds of up to 1500 rpm or even 3000 rpm. One skilled in the art would however appreciate that the disclosed procedures may also be adapted to suit other internal combustion engines.

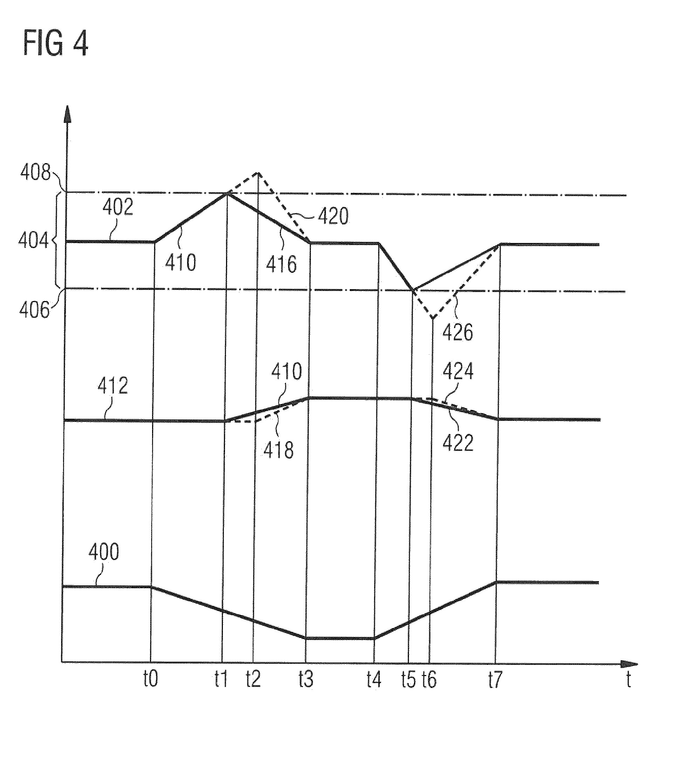

In the following, operation and control of internal combustion engine 100 such as described with reference to Fig. 1 to Fig. 3 are described in connection with Fig. 4 to Fig. 6. For illustration purposes, the procedures described herein are disclosed with reference to structural elements disclosed in Fig. 1 to Fig. 3. However, the skilled person will appreciate that the respective steps of the procedure can be performed on other embodiments as well.

Referring to Fig. 4, exemplary procedure for controlling the internal combustion engine in response to a varying gas quality is shown.

At the bottom of Fig. 4, an exemplary temporal development of a gas quality of gaseous fuel supplied to internal combustion engine 100 is indicated by line 400. As can be seen, the gas quality remains constant up to a time t0. The gas quality up to time t0 may correspond to a nominal gas quality as set, for example, by the engine manufacturer prior to shipping internal combustion engine 100 to site.

When internal combustion engine 100 is running on gaseous fuel with the nominal gas quality, operation of internal combustion engine 100 corresponds to a desired operation. For example, internal combustion engine 100 provides a preset power output as preferred.

At the top of Fig. 4, an exemplary temporal development of a valve opening duration of gaseous fuel admission valve 58 is illustrated by line 402. Gaseous fuel admission valve 58 supplies gaseous fuel to charge air for combustion in combustion chamber 10 of cylinder 9. Because internal combustion engine 100 is running on a gaseous fuel with a nominal gas quality, valve opening duration 402 of gaseous fuel admission valve 58 corresponds to a preferred valve opening duration. Preferred valve opening duration may be set by the engine manufacture and is stored on the memory of control unit 76. The preferred valve opening duration is somewhere within a preferred valve opening duration range 404 which may also be set by the engine manufacture and is stored on the memory of control unit 76. Preferred valve opening duration range 404 may be provided by control unit 76 as predefined duration maps which may depend on additional operating parameters of the engine, for example, on a load, a speed, a power output of internal combustion engine 100, an indicated mean effective pressure (IMAP), or a break mean effective pressure (BMEP). In some embodiments, internal combustion engine 100 may include a variable cam shaft timing adjusting an opening/closing timing of inlet and outlet valves 16, 18. In those embodiments, the predefined duration maps may also depend on the cam shaft timing. Preferred valve opening duration range 404 can be associated with valve opening durations that allow for a certain flexibility during operation of internal combustion engines. For example, in case cylinder 9 does not perform as desired, a flexibility of the valve opening duration in dependence of the preferred valve opening duration is allowed.

In the exemplary embodiment of Fig. 4, preferred valve opening duration range 404 is further defined by a lower valve opening duration limit 406 and an upper valve opening duration limit 408. When internal combustion engine 100 is supplied with gaseous fuel of nominal quality, the valve opening duration of gaseous fuel admission valve 58 is set within preferred valve opening duration range 404, e.g. the valve opening duration is set to be larger than lower valve opening duration limit 406 and smaller than upper valve opening duration limit 408. Exemplary, in Fig. 4, the valve opening duration is set to be in the middle of preferred valve opening duration range 404, but this does not necessarily have to be the case. Preferred valve opening duration range 404 may be, for example, in a range between 2 ms and 15 ms or 30 ms.

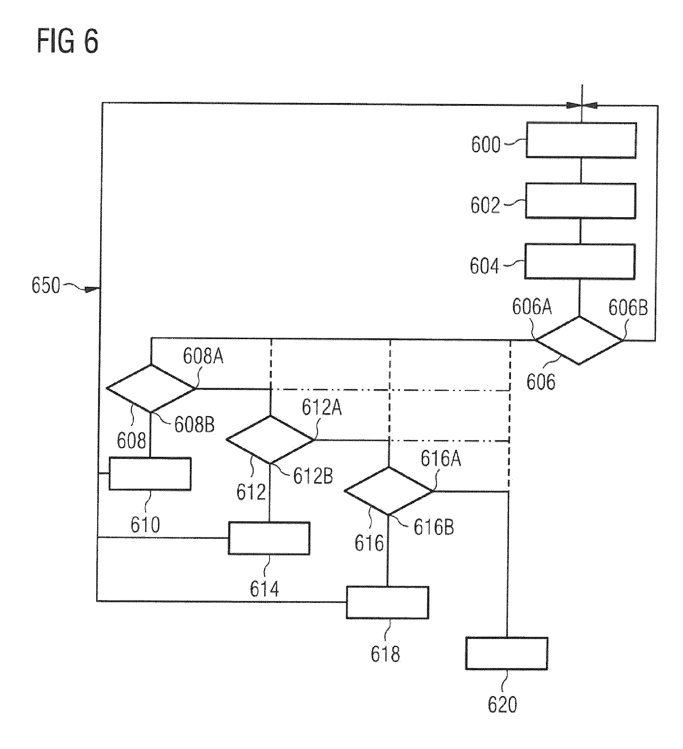

Referring also to Fig. 6, an exemplary control procedure for operating internal combustion engine 100 in response to a varying gas quality is shown. As explained, as long as internal combustion engine 100 is running on gaseous fuel with a nominal gas quality, internal combustion engine 100 performs as desired or preferred. Thus, in initial step 600, control unit 76 operates internal combustion engine 100 at a valve opening duration value that corresponds to a value within preferred valve opening duration range 404.

Referring to Fig. 4, at some point, for example at times larger t0, the gas quality of the gaseous fuel starts to deteriorate, indicated schematically by a linear decrease of line 400 at times larger t0. Of course, the deterioration of the gas quality may have any other temporal development than the one shown. The deterioration of the gas quality may be, for example, due to a decrease in gas supply pressure, if gaseous fuel of a gas reservoir is used, or the deterioration of gas quality may be due to a variation in gas composition. For example, the amount of inert gases may increase over time, thereby reducing the energy content of the gaseous fuel, and, therewith, reducing a lower heating value of the gaseous fuel.

Once the gas quality starts to deteriorate at times larger t0, the valve opening duration increases, as indicated by the linear increase 410. Again, the valve opening duration increase 410 does not necessarily need to be linear, as shown in Fig.4, but can correspond to any other increase, depending on the engine control routine reacting to the decrease of the gas quality. The valve opening duration increases because the engine control tries to compensate the deterioration in gas quality by burning a larger amount of gaseous fuel in order to, for example, provide the preset power output.

At step 602 of Fig. 6, control unit 76 therefore allows the valve opening duration to change in order to react to the variation in gas quality.

At step 604, control unit 76 continuously monitors the valve opening duration and receives actual valve opening duration values from gaseous fuel admission valve 58 via control connection line 104. As long as the actual valve opening duration value is within preferred valve opening duration range 404, control unit 76 does not perform any further control steps.

However, during a deterioration of the gas quality, for example, at times larger t1, the actual valve opening duration value may reach upper valve opening duration limit 408. Upper valve opening duration limit 408 may correspond, for example, to a maximal valve opening duration of gaseous fuel admission valve 58. When the valve opening duration value reaches the maximal valve opening duration, a maximal amount of gaseous fuel provided by gaseous fuel admission valve 58 is reached, and, thus, during a further deterioration of gas quality, gaseous fuel admission valve 58 may no longer compensate the poor gas quality by a change in valve opening duration. As a consequence, there is a risk that internal combustion engine 100 may shut down, switch to LFM, if possible, or may not provide the preset power output.

Thus, once control unit 76 determines at step 606 of Fig. 6 that the valve opening duration has changed to a value outside preferred valve opening duration range 404, control unit 76 initiates further control steps to react to the deteriorated gas quality. Those control steps include the adaption of at least one fuel supply parameter.

As shown in Fig. 4, a possible fuel supply parameter adapted by control unit 76 is a gaseous fuel differential pressure 412. Once control unit 76 determined at step 606 that the valve opening duration has changed to a value outside preferred valve opening duration range 404, a control task is sent to gaseous fuel pressure regulation unit 37 in order to increase a gaseous fuel differential pressure, as can be seen by the increase 414 of the gaseous fuel differential pressure. Again, increase 414 may not necessarily be linear.

Once the gaseous fuel differential pressure increases, more gaseous fuel per opening duration of gaseous admission valve 58 is supplied to combustion chamber 10. As a consequence, more fuel energy content per valve opening duration is provided for combustion, and, as a result, the valve opening duration can return to a value within preferred valve opening duration range 404, as indicated by the decrease 416 while internal combustion engine 100 continuously provides the preset power output. In other words: The lack of gas quality is compensated by providing more gaseous fuel at a smaller valve opening duration value.

Depending on how quick control unit 76 responds to the valve opening duration change, the gaseous fuel differential pressure increase 414 may start at times larger than t1, for example at a time t2, as indicated by pressure increase 418. Accordingly, valve opening duration decrease 420 also starts at a time t2, as indicated.

When the gas quality then remains constant, as shown for example at times larger t3, internal combustion engine 100 can provide the preset power output at an increased gaseous fuel differential pressure and at a valve opening duration set within preferred valve opening duration range 404, instead of having to shut down or to provide less power than the preset power output.

As another advantage, in case the gas quality deteriorates once again, internal combustion engine 100 is able to react to that deterioration by making use of the full flexibility in the valve opening duration. For this, control unit 76 may allow, at a further control step (not shown), the valve opening duration to change once again, in order to compensate the deteriorated gas quality by, once again, increasing the valve opening duration.

Likewise, in case the gas quality improves again, as shown for example at times larger t4, control unit 76 allows the valve opening duration to decrease in order to be able to provide a smaller amount of gaseous fuel with a higher fuel energy content for maintaining the preset power output.

If, however, the gas quality improves up to a point at which the valve opening duration leaves preferred valve opening duration range 404, for example at times larger t5, control unit 76 reduces a gaseous fuel differential pressure, indicated by decrease 422, until the valve opening duration value has reached a preferred valve opening duration value, as indicated for times larger t7.

Again, depending on how quick control unit 76 responds to the valve opening duration change, gaseous fuel differential pressure decrease 422 may start at times larger than t5, for example at a time t6, as indicated by pressure decrease 424 and, accordingly, by the corresponding valve opening duration increase 426.

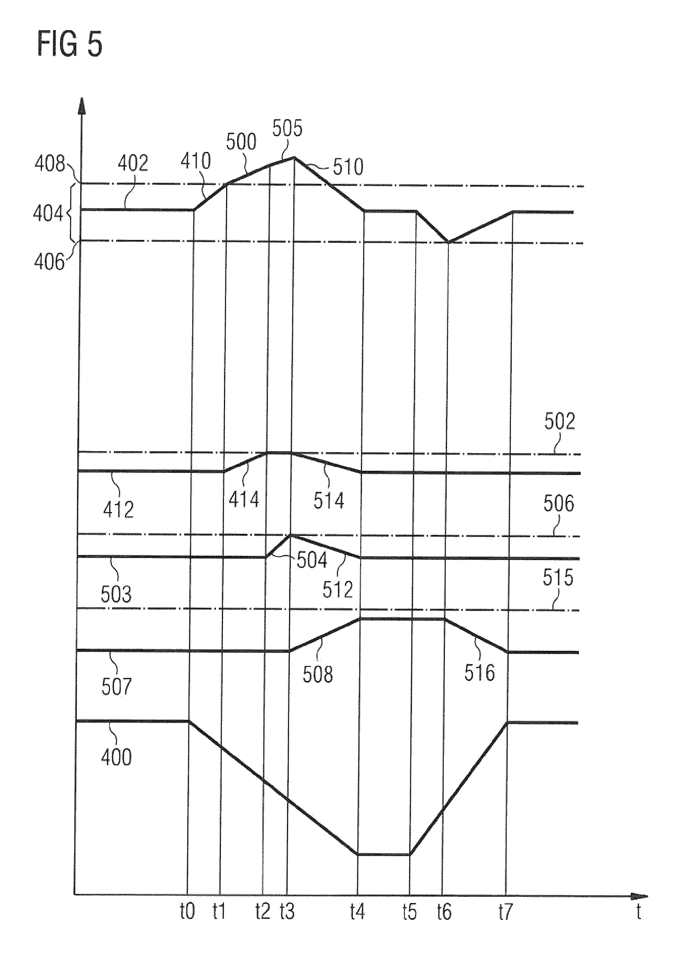

Referring now to Fig. 5, an exemplary control procedure is shown for the case the gaseous fuel supplied to internal combustion engine 100 is subject to a larger deterioration in gas quality. Such a large deterioration in gas quality may occur, for example, when an amount of gaseous fuel flow to internal combustion engine 100 is limited, a gaseous fuel supply pressure is limited, or, in case of land fill gas or bio gas associated gas (petroleum application), an amount of inert gases in the gasesous fuel increases. The control procedure is explained with reference to the flow diagram shown in Fig. 6. Elements already explained in connection with Fig. 4 have the same reference numerals.

Similar to Fig. 4, the gas quality starts to deteriorate at times larger t0, which is the time at which the engine control tries to compensate the deteriorated gas quality by an increased amount of gaseous fuel, thereby increasing the valve opening duration, as indicated by increase 410. Once control unit 76 determines at step 606 that the valve opening duration changes to a value outside preferred valve opening duration range 404, control unit 76 adapts at step 610 a gaseous fuel differential pressure by sending out a control task to gaseous fuel pressure regulation unit 37 in order to increase the gaseous fuel differential pressure, as indicated by increase 414 at times larger t1.

This procedure is performed by control unit 76 in a control loop 650, as indicated in Fig. 6. However, when the deterioration of gas quality is larger, as exemplarily shown in Fig. 5, even though the gaseous fuel differential pressure increases during every iteration of control loop 650 or because the gaseous fuel supply pressure is limited, the deteriorated gas quality may not be compensated, as shown by the increase 500 of valve opening duration 402 at times larger t1. Due to more gaseous fuel being supplied to internal combustion engine 100, increase 500 may be smaller than increase 410, as schematically shown in Fig. 5. However, this may not necessarily be the case.

Because the valve opening duration still increases despite the increased gaseous fuel differential pressure, at some iteration during control loop 650, or at a time t2 as shown in Fig. 4, the gaseous fuel differential pressure reaches a preset maximal gaseous fuel differential pressure, as indicated by the dashed-dotted line 502. Preset maximal gaseous fuel differential pressure 502 may be based, for example, on a maximal discharge pressure of a gaseous fuel compressor of the gaseous fuel pressure regulation unit 37. Preset maximal gaseous fuel differential pressure 502 may be, for example, between about 5 bar and about 15 bar.

Once the gaseous fuel differential pressure has reached preset maximal gaseous fuel differential pressure 502, the poor gas quality cannot be compensated by increasing the gaseous fuel differential pressure further, and internal combustion engine 100 may have to be shut down or produce less power.

As a consequence, once control unit 76 determined at step 608 that the gaseous fuel differential pressure has reached preset maximal gaseous fuel differential pressure 502, control unit 76 adapts in a further step 614 a second fuel supply parameter. The second fuel supply parameter may be, for example, an amount of ignition fuel provided by ignition fuel injector 38. An exemplary temporal development of the amount of ignition fuel provided by ignition fuel injector 38 is shown by line 503.

Control unit 76 adapts the amount of ignition fuel by sending out a control task to ignition fuel injector 38 via control connection line 108 in order to adjust an injection duration of ignition fuel injector 38, thereby increasing the amount of ignition fuel, as indicated by increase 504 at times larger t1.

By adapting the amount of ignition fuel, an energy content of the injected ignition fuel relative to the energy content of the gaseous fuel is changed, thereby providing the plus of fuel energy content which is necessary to compensate the lack of fuel energy content of the poor quality gaseous fuel. Control unit 76 may adapt the amount of ignition fuel within control loop 650, such that during every iteration of control loop 650 the amount of ignition fuel is increased until the valve opening duration returns to a value within preferred valve opening duration range 404.

If, however, the gas quality deteriorates further and the poor gas quality cannot be compensated by the additional amount of ignition fuel, the valve opening duration may still increase, as shown schematically in Fig. 5 by the increase 505 at times larger t2. Again increases 505 may be smaller than increase 500, but not necessarily. Thus, at some iteration during control loop 650, or at a time t3 as shown in Fig. 5, also the amount of ignition fuel reaches a preset maximal amount of ignition fuel indicated by the dashed-dotted line 506. Preset maximal amount of ignition fuel 506 may be based on an injection capacity of ignition fuel injector 38. For example, for medium size internal combustion engine 100 a maximum injection capacity of ignition fuel injector 38 may be, for example, about 0.2 % to about 10 % of the overall amount of energy provided for combustion to internal combustion engine 100.

Once control unit 76 determines at step 612 that the amount of ignition fuel has reached a preset maximal amount of ignition fuel and that the poor gas quality cannot be compensated by increasing the gaseous fuel differential pressure and the amount of ignition fuel, in a further step 618, control unit 76 enables main liquid fuel injector 39 to supply an additional amount of liquid fuel into combustion chamber 10 via main liquid fuel injector 39, as indicated by line 507. For this, control unit 76 sends out a control task to main liquid fuel injector 39 via control connection line 110 in order to adjust an injection duration of main liquid fuel injector 39, thereby increasing an amount of liquid fuel provided by main liquid fuel injector 39, as indicated by increase 508.

By using main liquid fuel injector 39 as an auxiliary-type ignition fuel injector, more liquid fuel can be burnt in combustion chamber 10 than by using ignition fuel injector on its own. Thus, by using main liquid fuel injector 39, an energy content of the injected liquid fuel relative to the energy content of the gaseous fuel is increased further.

Once the amount of injected liquid fuel increases, as indicated by increase 508, the energy content provided by liquid fuel injected through main liquid fuel injector 39 compensates the lack of energy content of the poor quality gaseous fuel, and, as a result, the valve opening duration can return to a value within preferred valve opening duration range 404, as indicated by decrease 510, while internal combustion engine 100 continuously provides the preset power output.

Because the amount of liquid fuel injected through main liquid fuel injector 39 provides enough energy content, also the amount of ignition fuel and the gaseous fuel differential pressure are adapted by control unit 76 such that those parameters could return to their initial values, as indicated exemplarily by the decrease 512 and 514, respectively. However, in some embodiments, those adaptions may not be performed by control unit 76.

When the gas quality then remains constant, as shown for example at times larger t4, because the gaseous fuel differential pressure and the amount of ignition fuel are returned to their initial values, internal combustion engine 100 can provide the preset power output by using main liquid fuel injector 39 as an auxiliary-type fuel injector only, and may still have full flexibility on the valve opening duration 402, the gaseous fuel differential pressure 412, and the ignition fuel injector 38, to react to a further variation in gas quality. Thus, internal combustion engine 100 can provide the preset power output by continuously burning gaseous fuel of poor quality and there is no need to shut down the engine or switch to LFM.

If, at some point, the gas quality deteriorates even further, in some embodiments, the amount of liquid fuel provided by main liquid fuel injector 39 might approach a preset maximal amount of liquid fuel, indicated by the dashed-dotted line 515. The preset maximal amount of liquid fuel may be, for example, between 5 % and 100 % of the overall amount of energy provided for combustion to internal combustion engine 100. In cases where main liquid fuel injector 39 is the only liquid fuel injector, the preset maximal amount of liquid fuel may be, for example, between 0.1 % and 100 % of the overall amount of energy provided for combustion to internal combustion engine 100. Thus, a gradual transition between operation in GFM and LFM may occur. Once control unit 76 determines at step 616 that the amount of liquid fuel has reached preset maximal amount of liquid fuel 515 - for example, 100% of the overall amount of energy provided to internal combustion engine 100 were not enough to compensate the deteriorated gas quality, at step 620 control unit 76 may finally shut down internal combustion engine 100, and/or indicate that the preset power output may not be provided.

However, in case the gas quality improves again, as shown for example at times larger t5, control unit 76 allows the valve opening duration to decrease in order to be able to provide a smaller amount of gaseous fuel with a higher fuel energy content for maintaining the preset power output.

When the gas quality improves even up to a point at which the valve opening duration leaves preferred valve opening duration range 404, for example at times larger t6, control unit 76 reduces the amount of liquid fuel injected through main liquid fuel injector 39, as indicated by decrease 516, until the valve opening duration value reaches the preferred valve opening duration value, as indicated at times larger t7.

Generally, adapting any of the fuel supply parameters may be performed within control loop 650 stepwise over a plurality of adjustment steps or within one adjustment step. Also, appropriate values for adapting the fuel supply parameters, such as the gaseous fuel differential pressure, the injection duration of ignition fuel injector 38 or main liquid fuel injector 39 may be provided by control unit 76, for example, based on predefined characteristic maps stored on the memory of control unit 76. Those predefined characteristic maps may depend on additional operating parameters of internal combustion engine 100, such as on a load or a speed of internal combustion engine. Moreover, appropriate values for adapting the fuel supply parameters in response to a varying gas quality may have been determined, for example, prior to shipment of internal combustion engine 100, and may be based on empirical data such as empirical data obtained during tests with gaseous fuels of various gas qualities.

In addition or alternatively, control unit 76 may adjust the injection duration using a preset injection duration as a start injection duration, and increase the start injection duration during every iteration of control loop 650, for example during every combustion cycle of cylinder 9, until the injection duration causes the valve opening duration to return to preferred valve opening duration range 404. For this, control unit 76 may analyze the rate of change of valve opening duration in response to a change in injection duration, determine a rate of change of the injection duration, and adjust an adaption of the injection duration until the determined rate of change of the injection duration approaches zero and changes its direction. A similar approach may be followed during adaption of the gaseous fuel differential pressure.

All control actions performed by control unit 76 are configured to control the valve opening duration to obtain a value within preferred valve opening duration range 404. Thus, in case the gas quality improves again, gaseous fuel differential pressure 412, the amount of ignition fuel (line 503), and the amount of liquid fuel (line 507) may be decreased. Gaseous fuel differential pressue 412 may be decreased down to a preset minimal gaseous fuel differential pressure in a range of, for example, 0.1 bar and 1 bar. The amount of ignition fuel may be decreased down to a preset minimal amount of ignition fuel of 0.1 %. And the amount of liquid fuel may be decreased down to a preset minimal amount of ignition fuel of 0.1 %.

Moreover, as indicated in Fig. 6 by the dashed and dashed-dotted lines, any sequence or selection of the mentioned fuel supply parameters may be performed by control unit 76 prior to shutting down internal combustion engine 100.

Moreover, control unit 76 may monitor the valve opening duration over a preset number of combustion cycles and/or control loop iterations, and control unit 76 may adapt the fuel supply parameters such as a gaseous fuel differential pressure, an amount of ignition fuel or an amount of liquid fuel only, if control unit 76 determines at step 606 that the valve opening duration is outside preferred valve opening duration range 404 for a number of combustion cycles of, for example, 4 combustion cycles or more. The combustion cycles for which control unit 76 determined that the valve opening duration is outside preferred valve opening duration range 404 do not necessarily have to be consecutive cycles. Alternatively or in addition, control unit 76 adapts the aforementioned fuel supply parameters only, if during a monitoring period of several 10 seconds to 120 minutes the valve opening duration is outside of preferred valve opening duration range 404, thereby taking into account a long-term variation in gas quality compared to short-term effects which may also cause the valve opening duration to change, such as due to an oscillating gaseous fuel pressure, or due to an instable gaseous fuel source (associated gas).

Moreover, in some embodiments, control unit 76 may adapt the aforementioned fuel supply parameters only, if for a plurality of cylinders 9 of internal combustion engine 100, the respective valve opening duration is determined to be outside preferred valve opening duration range 404, thereby taking into account small fluctuations of the valve opening duration between different cylinders 9 of internal combustion engine 100.

Generally, applicability of certain embodiments of the herein disclosed procedure for controlling an internal combustion engine operating at least partly on gaseous fuel with a varying gas quality, may depend on the type of internal combustion engine 100 used. For example, the adaption of a gaseous fuel differential pressure to modify the fuel energy content may be applicable to any gaseous fuel internal combustion engine, such as spark iginited gaseous fuel internal combustion engines. The adaption of an amount of ignition fuel to modify the fuel energy content may be applicable to any liquid fuel ignited gaseous fuel internal combustion engine, and the adaption of an amount of liquid fuel to modify the fuel energy content may be applicable to any DF internal combustion engine having a main liquid fuel injector.

The herein disclosed control procedures allow internal combustion engines to continuously provide a preset power output even when running on poor quality gaseous fuel and/or gaseous fuel of a varying gas quality, such as on gaseous fuels of associated oil fields. In those gas reservoirs, typically, gas pressure and/or gas composition vary over time which may cause the engine to malfunction, shut down or necessitate a switch over to the more expensive liquid fuel.

Although the preferred embodiments of this invention have been described herein, improvements and modifications may be incorporated without departing from the scope of the following claims.

## Claims

1. A method for controlling an internal combustion engine (100) operating at least partly on gaseous fuel with a varying gas quality (400), the internal combustion engine (100) including a gaseous fuel admission valve (58) configured to supply the gaseous fuel to charge air, the method comprising:
operating (step 600) the internal combustion engine (100) to provide a preset power output with a valve opening duration (402) of the gaseous fuel admission valve (58) set within a preferred valve opening duration range (404);
allowing (step 602) the valve opening duration (402) to change in order to maintain the preset power output;
monitoring (step 604) the valve opening duration (402);
determining (step 606) that, during operation of the internal combustion engine (100) at the predetermined power output, the valve opening duration (402) changed to a value outside the preferred valve opening duration range (404); and
adapting (steps 610, 614, 618) a fuel supply parameter (412, 503, 507) such that the valve opening duration (402) returns to the preferred valve opening duration range (404), while continuously providing the preset power output.

2. The method according to claim 1, wherein the fuel supply parameter (412, 503, 507) is configured to modify the fuel energy content provided for combustion.

3. The method according to claim 1 or claim 2, wherein adapting (steps 610, 614, 618) a fuel supply parameter (412, 503, 507) further comprises:
adapting (step 610) a gaseous fuel differential pressure (412) by adjusting a pressure of a gaseous fuel source (36), wherein the gaseous fuel differential pressure (412) is adaptable between a preset maximal gaseous fuel differential pressure (502) in a range of, for example, between 5 bar and 15 bar, and a preset minimal gaseous fuel differential pressure in a range of, for example, between 0.1 bar and 1 bar.

4. The method according to any one of the preceding claims, wherein the internal combustion engine (100) is configured to be a liquid fuel ignited gaseous fuel internal combustion engine (200) and adapting (steps 610, 614, 618) a fuel supply parameter (412, 503, 507) further comprises:
adapting (step 614) an amount of ignition fuel (503) by adjusting an injection duration of an ignition fuel injector (38), wherein the amount of ignition fuel (503) is adaptable between a preset maximal amount of ignition fuel (506) in a range of, for example, between about 0.2 % and about 10 %, and a preset minimal amount of ignition fuel of 0.1 %.

5. The method according to any one of the preceding claims, wherein the internal combustion engine (100) is configured to be a dual-fuel internal combustion engine (300) with a main liquid fuel injector (39) and adapting (steps 610, 614, 618) a fuel supply parameter (412, 503, 507) further comprises:
adapting (step 618) an amount of liquid fuel (507) by adjusting an injection duration of the main liquid fuel injector (39), wherein the amount of liquid fuel (507) is adaptable between a preset maximal amount of liquid fuel (515) in a range of, for example, between about 5 % and about 100 %, and a preset minimal amount of liquid fuel of 0.1 %.

6. The method according to any one of the preceding claims, wherein, in case of a deteriorating gas quality, as a first fuel supply parameter a gaseous fuel differential pressure (412) is adapted (step 610) until the gaseous fuel differential pressure (412) reaches a preset maximal gaseous fuel differential pressure (502) of, for example, between about 5 bar and about 15 bar,
as a second fuel supply parameter an amount of ignition fuel (503) is adapted (step 614) until the amount of ignition fuel (503) reaches a preset maximal amount of ignition fuel (506) of, for example, between about 0.2 % and about 10 %, and/or
as a third fuel supply parameter an amount of liquid fuel (507) is adapted (step 618) until the amount of liquid fuel (507) reaches a maximal amount of liquid fuel (515) of, for example, between about 5 % and about 100 %, and/or wherein
adaption (step 610, 614, 618) of the respective fuel supply parameters (502, 503, 507) is reversed in case of an improving gas quality.

7. The method according to any one of the preceding claims, further comprising:
associating the fuel supply parameter with a preset maximal change (502, 506, 515) in operating condition;
determining (steps 608, 612, 616) that the fuel supply parameter reaches its preset maximal change (502, 506, 515); and
allowing the valve opening duration to change again for providing the preset power output.

8. The method according to any one of the preceding claims, wherein the change of the valve opening duration (402) is performed in order to maintain the preset power output of the internal combustion engine (100) in response to the varying gas quality (400), and/or wherein
adapting (steps 610, 614, 618) a fuel supply parameter (412, 503, 507) further comprises:
determining a rate of change of the valve opening duration (402) in response to an adaption of the fuel supply parameter (412, 503, 507); and
adjusting an adaption of the fuel supply parameter (412, 503, 507) until the determined rate of change of the valve opening duration (402) approaches zero and/or changes direction.

9. The method according to any one of the preceding claims, wherein the preferred valve opening duration range (404) is associated with a gaseous fuel of a nominal gas quality, and/or
wherein the preferred valve opening duration range (404) is based on a predefined duration map depending on an operating parameter of the internal combustion engine (100) such as on a load, a power, an indicated mean effective pressure, a break mean effective pressure, a speed, or a cam shaft timing of the internal combustion engine (100).

10. The method according to any one of the preceding claims, wherein adapting (steps 610, 614, 618) a fuel supply parameter (412, 503, 507) is performed stepwise over a plurality of adjustment steps.

11. The method according to any one of the preceding claims, wherein appropriate values for adapting (steps 610, 614, 618) the fuel supply parameter (412, 503, 507) are provided based on preselected characteristic maps depending on additional operating parameters such as on a load or a speed of the internal combustion engine (100).

12. The method according to any one of the preceding claims, wherein the fuel supply parameters (412, 503, 507) are adapted only, if the monitored valve opening duration (402) is outside the preferred valve opening duration range (404) for a preset number of combustion cycles, such as 4 or more combustion cycles and/or over a time period of several 10 seconds to 120 minutes.

13. The method according to any one of the preceding claims, wherein, for individual cylinders (9) of the internal combustion engine (100), the valve opening duration (402) is monitored, and the fuel supply parameter (412, 503, 507) is adapted only, if for a plurality of cylinders (9) the valve opening duration (402) is outside the preferred valve opening duration range (404).

14. The method according to any one of the preceding claims, further comprising:
repeatedly performing a control loop (650), wherein the valve opening duration (402) within the preferred valve opening duration range (404) is used as a desired valve opening duration value, the monitored valve opening duration (402) is used as an actual valve opening duration value, and the control loop (650) is performed until the actual valve opening duration value corresponds to the desired valve opening duration value.

15. An internal combustion engine (100; 200; 300) for operation on at least partly gaseous fuel with a varying gas quality (400), the internal combustion engine (100; 200; 300) comprising:
a gaseous fuel admission valve (58) configured to supply the gaseous fuel to charge air; and
a control unit (76) connected at least to the gaseous fuel admission valve (58) and configured to perform the method according to any one of the preceding claims.
